# EUROPEAN PATENT APPLICATION

(11) **EP 4 664 795 A1**
(43) Date of publication of application: **17.12.2025**
(21) Application number: 23921463.8
(22) Date of filing: 06.10.2023
(51) Int. Cl.: H04B 10/90, H04B 10/50, H04B 10/69

(54) **MULTICARRIER TERAHERTZ WIRELESS TRANSMISSION SYSTEM, AND METHOD FOR TRANSMITTING MULTICARRIER TERAHERTZ SIGNAL IN SYSTEM**

(30) Priority: 09.02.2023 KR 20230017394
(71) Applicant: Electronics and Telecommunications Research Institute, Daejeon 34129 (KR)
(72) Inventor: LEE, Won Kyoung, Daejeon 34129 (KR); KIM, Eon-sang, Daejeon 34129 (KR); CHO, Seung-Hyun, Daejeon 34129 (KR); LEE, Joon Ki, Daejeon 34129 (KR)
(74) Representative: Betten & Resch
(86) International application number: PCT/KR2023/015408
(87) International publication number: WO 2024/167089

(57) **Abstract**

Disclosed are a multicarrier terahertz wireless transmission system and a method for transmitting a multicarrier terahertz signal in the system. A transmitting device in the multicarrier terahertz wireless transmission system comprises: a plurality of laser diodes (LDs) that output optical signals having different carrier frequencies; a plurality of optical modulators that optically modulate LD signals outputted through the LDs; a beating light source that provides a local oscillator (LO) signal needed for generating a terahertz signal through optical beating with the LD signals; and a signal generator that generates a multicarrier terahertz signal composed of terahertz signals having different carrier frequencies through optical beating of each of the LD signals and the LO signal, wherein a zero level offset of each of the terahertz signals having different carrier frequencies may be adjusted differently. The multicarrier terahertz signal may be separated by channel by using features on a histogram of the multicarrier terahertz signal and filtering, by means of a precalculated histogram filter or an adaptive filter using histogram peaks, so that only two peaks are included.

## Description

### Technical Field

The following description relates to a method and apparatus for maximizing wireless transmission capacity and reducing a system cost in a wireless transmission system of transmitting and receiving a terahertz signal.

### Background Art

Microwave and millimeter wave bands below 60 gigahertz (GHz) are used in the Internet of Things such as broadcasting communication, vehicle communication, and ship communication, and demands for increasing the speed of data transmission and increasing transmission capacity for smooth sixth-generation (6G) communication are still high. Particularly, among these demands, high-speed data capacity of greater than or equal to 1 terabit per second (Tbps) and low latency characteristic of less than or equal to 1 millisecond (ms) are increasing interest in wireless communication technology in terahertz bands.

In order to expand the transmission capacity of terahertz wireless communication, various multi-channel wireless transmission technologies have been reported. A demultiplexer device has been proposed, which separates terahertz wireless signals multiplexed in multiple channels by each channel using the tunneling effect of a waveguide, and research is underway to reduce performance errors and insertion losses caused by errors occurring in the manufacturing process.

The existing method of multi-channel wireless transmission uses a mixer to separate signals by each channel with different carrier frequencies by heterodyne beating with local signals. In the method of using a mixer, the number of channels that may be received is limited by the coverage of a receiving antenna and the bandwidth of an oscilloscope.

In addition, rather than simultaneously separating multicarrier terahertz signals, a method of sequentially separating channels by changing the frequency of local signals has been reported. In order to provide smooth real-time service, new technology is required that may allow large amounts of data to be transmitted at high speeds and that enables simultaneous transmission and reception of multiple channels.

### Disclosure of the Invention

### Technical Goals

The present disclosure is to provide a method and apparatus for generating a multicarrier terahertz signal by controlling zero level (binary "0") offsets differently for each channel without using a separate terahertz multiplexer.

In addition, the present disclosure is to provide a method and apparatus for separating multicarrier terahertz signals by each channel using histogram filtering without using a separate terahertz demultiplexer.

However, technical goals are not limited to the foregoing goals, and there may be other technical goals.

### Technical Solutions

According to an embodiment, a transmission apparatus for a multicarrier terahertz wireless transmission system includes a plurality of laser diodes (LDs) configured to output optical signals having different carrier frequencies, a plurality of optical modulators configured to optically modulate LD signals output through the LDs, a beating light source configured to provide a local oscillator (LO) signal required to generate terahertz signals through optical beating of the LD signals, and a signal generator configured to generate a multicarrier terahertz signal including the terahertz signals having different carrier frequencies through optical beating of each of the LD signals and the LO signal, wherein zero level offsets of each of the terahertz signals having different carrier frequencies may be adjusted differently from each other.

The zero level offsets of each of the terahertz signals having different carrier frequencies may be adjusted differently from each other, by adding different offsets to a voltage of a data signal input to each of the optical modulators.

The zero level offsets of each of the terahertz signals having different carrier frequencies may be adjusted differently from each other, by adjusting a bias voltage input to each of the optical modulators.

The multicarrier terahertz wireless transmission system may further include phase delayers configured to differently control phases of the respective LD signals optically modulated by the plurality of optical modulators.

The zero level offsets of each of the terahertz signals having different carrier frequencies may be adjusted differently from each other, by differently setting phase delay values of the respective phase delayers.

According to an embodiment, a reception apparatus for a multicarrier terahertz wireless transmission system includes a digital signal processor (DSP) configured to separate a histogram of a received multicarrier terahertz signal by each channel using a histogram filter, separate the received multicarrier terahertz signal by each channel using information on the histogram separated by each channel, and restore the received multicarrier terahertz signal to an original signal.

A boundary value, a bandwidth, and a filter shape of the histogram filter may be designed so that only two peaks may be included for each channel in the histogram of the received multicarrier terahertz signal.

The zero level offsets of the received multicarrier terahertz signal may be adjusted differently from each other, by adding different offsets to a voltage of a data signal input to each of optical modulators included in a transmission apparatus.

The received multicarrier terahertz signal may be a signal in which zero level offsets may be adjusted differently from each other by adjusting a bias voltage input to each of optical modulators included in a transmission apparatus.

The received multicarrier terahertz signal may be a signal in which zero level offsets may be adjusted differently from each other by differently setting phase delay values of respective phase delayers included in a transmission apparatus.

According to an embodiment, a multicarrier terahertz signal transmission method performed by a transmission apparatus of a multicarrier terahertz wireless transmission system includes outputting optical signals having different carrier frequencies through a plurality of laser diodes (LDs), optically modulating LD signals output through the LDs using a plurality of optical modulators, outputting a local oscillator (LO) signal required to generate terahertz signals through optical beating of the LD signals through a beating light source, and generating a multicarrier terahertz signal including the terahertz signals having different carrier frequencies through optical beating of each of the LD signals and the LO signal, using a signal generator, wherein zero level offsets of each of the terahertz signals having different carrier frequencies may be adjusted differently from each other.

The zero level offsets of each of the terahertz signals having different carrier frequencies may be adjusted differently from each other, by adding different offsets to a voltage of a data signal input to each of the optical modulators.

The zero level offsets of each of the terahertz signals having different carrier frequencies may be adjusted differently from each other, by adjusting a bias voltage input to each of the optical modulators.

The multicarrier terahertz signal transmission method may further include differently controlling phases of the respective LD signals optically modulated by the plurality of optical modulators, using phase delayers.

The zero level offsets of each of the terahertz signals having different carrier frequencies may be adjusted differently from each other, by differently setting phase delay values of the respective phase delayers.

### Effects

According to an embodiment of the present disclosure, a multicarrier terahertz signal may be generated by controlling zero level offsets differently for each channel without using a separate terahertz multiplexer.

In addition, according to an embodiment of the present disclosure, multicarrier terahertz signals may be received simultaneously and separated by each channel using histogram filtering without using a separate terahertz demultiplexer.

Accordingly, the present disclosure may increase transmission capacity of a terahertz wireless transmission system and may reduce the cost and volume of the system. Brief Description of Drawings
FIGS. 1A and 1B are diagrams illustrating a concept of a multicarrier terahertz wireless transmission system according to an embodiment.
FIGS. 2A to 2C are diagrams illustrating a method of adjusting zero level offsets of a modulation signal modulated by an optical modulator differently for each channel, according to an embodiment.
FIG. 3 is a diagram illustrating a method of restoring data by a reception apparatus of a multicarrier terahertz wireless transmission system, according to an embodiment.
FIGS. 4A and 4B are diagrams illustrating results of verifying function and performance of a multicarrier terahertz wireless transmission system through a simulation for a 4-channel binary phase-shift keying (BPSK) modulation method, according to an embodiment.
FIG. 5 is a diagram illustrating a result of restoring data by a reception apparatus of a multicarrier terahertz wireless transmission system according to an embodiment.

### Best Mode for Carrying Out the Invention

The following detailed structural or functional description is provided as an embodiment only and various alterations and modifications may be made to embodiments. Here, embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a," "an," and "the" are intended to include the plural forms as well, unless the context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. It will be further understood that the terms "comprises/including" and/or "includes/including" when used herein, specify the presence of stated features, integers, operations, operations, elements, and/or components, but do not preclude the presence or addition of one or more other features, integers, operations, operations, elements, components and/or groups thereof.

Unless otherwise defined, all terms used herein including technical or scientific terms have the same meaning as commonly understood by one of ordinary skill in the art to which embodiments belong. Terms, such as those defined in commonly used dictionaries, should be construed to have meanings matching with contextual meanings in the relevant art and the present disclosure, and are not to be construed as an ideal or excessively formal meaning unless otherwise defined herein.

Hereinafter, embodiments will be described in detail with reference to the accompanying drawings. When describing the embodiments with reference to the accompanying drawings, regardless of drawing numerals, like reference numerals refer to like elements and a repeated description related thereto will be omitted.

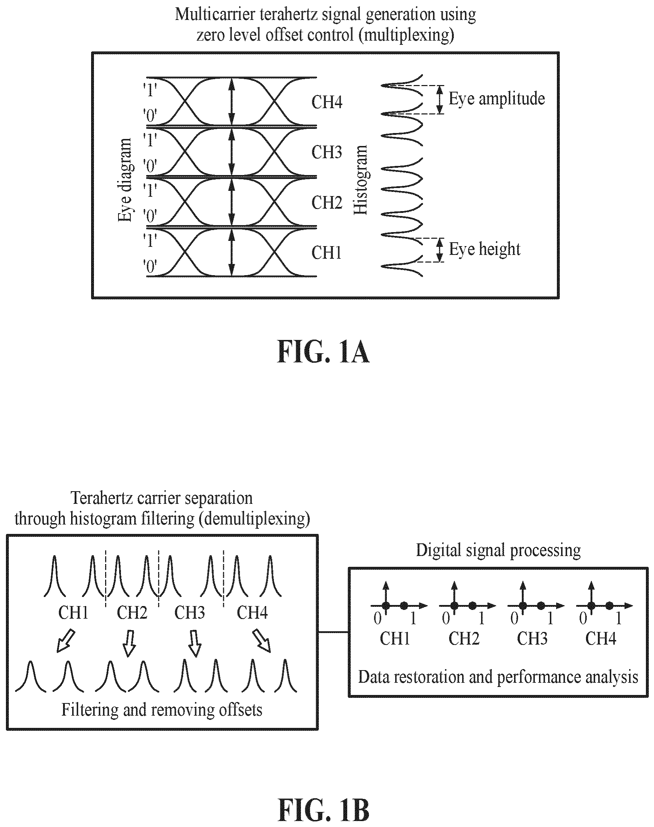

FIGS. 1A and 1B are diagrams illustrating a concept of a multicarrier terahertz wireless transmission system according to an embodiment.

Unlike existing multi-channel wireless transmission technology that requires adding receivers by the number of channels to increase the transmission capacity of a wireless transmission system of transmitting and receiving a terahertz signal, the present disclosure proposes a method that allows simultaneous transmission of a multicarrier wireless signal without a separate multiplexer/demultiplexer.

FIG. 1A illustrates a conceptual diagram of multicarrier terahertz signal generation performed by a transmission apparatus of a multicarrier terahertz wireless transmission system, and FIG. 1B illustrates a conceptual diagram of multicarrier terahertz signal separation and restoration performed by a reception apparatus of the multicarrier terahertz wireless transmission system.

More specifically, in order to eliminate a performance gap between channels of terahertz modulation signals of all channels included in a multicarrier terahertz signal, the transmission apparatus of the multicarrier terahertz wireless transmission system may maintain the same eye amplitude for each channel, as shown in an eye diagram of FIG. 1A, and may perform modulation by adjusting only zero level offsets differently for each channel. In addition, the eye amplitude may be adjusted differently for each channel according to the non-uniform bandwidth characteristics of a non-linear device such as a uni-traveling-carrier photodiode (UTC-PD) that generates a terahertz signal, and modulation may be performed by adjusting the zero level offsets differently for each channel. Here, the modulation method may include all methods of on-off keying (OOK), binary phase-shift keying (BPSK), quadrature phase-shift keying (QPSK), pulse-amplitude modulation (PAM), and quadrature amplitude modulation (QAM).

Accordingly, the modulated multicarrier terahertz signal may appear, on a histogram, as separated signals not overlapping each other, in which the signals have two peaks corresponding to zero level (binary "0") and one level (binary "1") for each channel.

In an embodiment of the present disclosure, a channel is defined as the carrier frequency of a terahertz signal, but this is only an example and may also be defined as the polarization direction or the length of a data pattern.

The reception apparatus of the multicarrier terahertz wireless transmission system may use the characteristics on the histogram of the multicarrier terahertz signal to divide the multicarrier terahertz signal by each channel and then may restore the multicarrier terahertz signal. The reception apparatus may receive the multicarrier terahertz signal transmitted through a wireless link through elements such as a Schottky barrier diode (SBD), a mixer, etc., and may display the multicarrier terahertz signal on the histogram.

As shown in FIG. 1B, the reception apparatus may separate the multicarrier terahertz signal by each channel by filtering to include only two peaks through a precalculated histogram filter on the histogram or an adaptive filter using histogram peaks. The reception apparatus may reversely use such information obtained by the separating on the histogram to separate the multicarrier terahertz signal by each channel, then may restore data using digital signal processing technology, and may analyze performances of modulation, demodulation, and transmission.

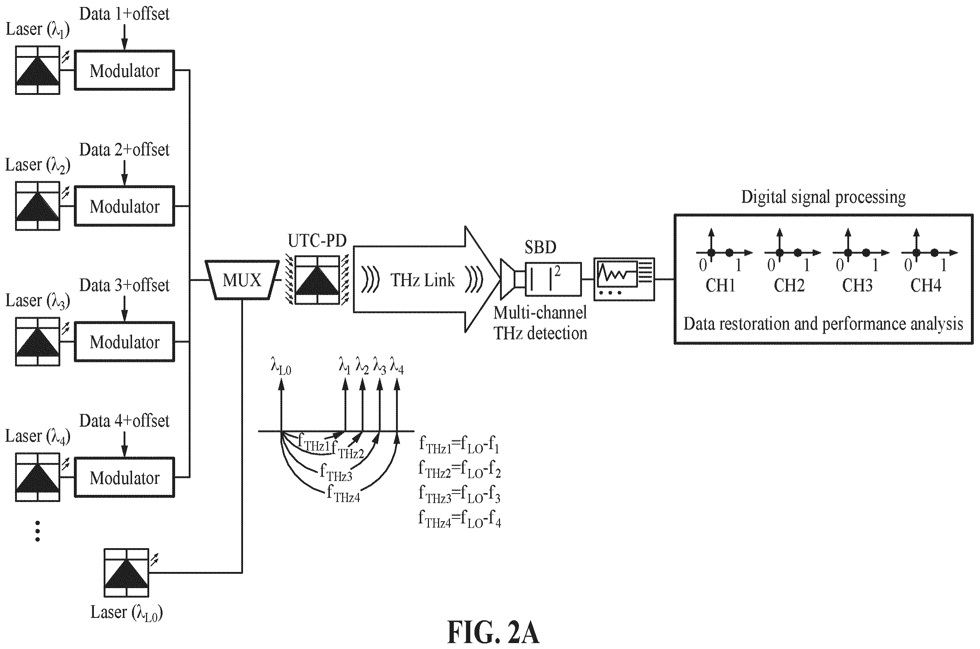

FIGS. 2A to 2C are diagrams illustrating a method of adjusting zero level offsets of a modulation signal modulated by an optical modulator differently for each channel, according to an embodiment.

Referring to FIGS. 2A to 2C, a transmission apparatus may include a plurality of laser diodes (LDs) configured to output optical signals having different carrier frequencies and a plurality of optical modulators configured to optically modulate LD signals output through the plurality of LDs. In addition, the transmission apparatus may include a beating light source configured to provide a local oscillator (LO) signal required to generate terahertz signals through optical beating of the LD signals and a signal generator configured to generate a multicarrier terahertz signal including the terahertz signals having different carrier frequencies through optical beating of each of the LD signals and the LO signal. For example, the signal generator may be a UTC-PD, which is a non-linear device.

Here, the transmission apparatus may adjust offsets so that zero level of a modulation signal modulated by the optical modulator is different for each channel, more specifically, as shown in FIG. 2A, the zero level offsets may be adjusted differently from each other by adding different offsets to a voltage of a data signal input to each of the optical modulators.

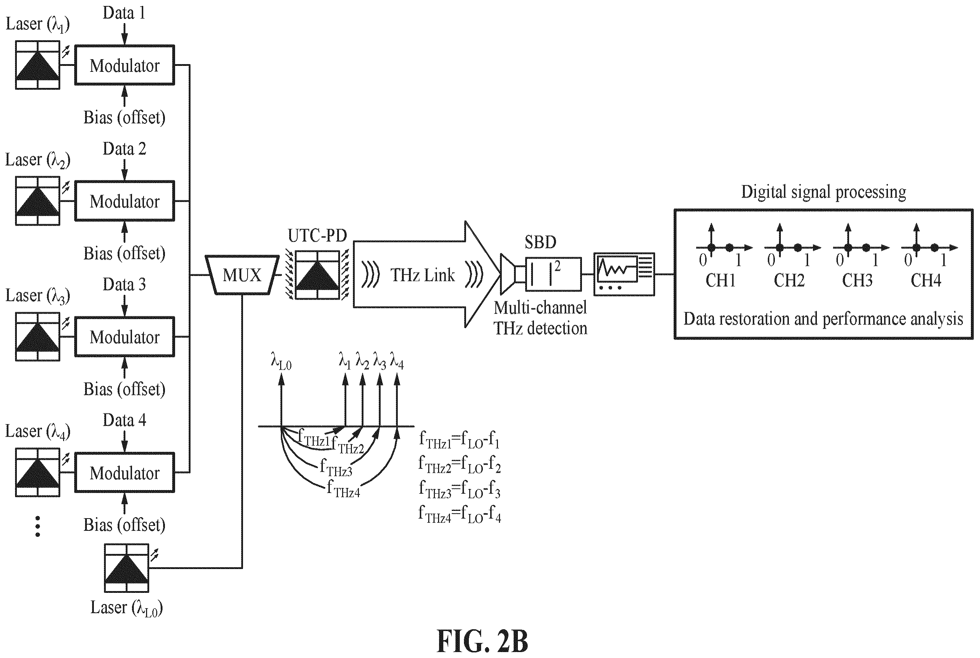

Alternatively, as shown in FIG. 2B, the transmission apparatus may adjust the zero level offsets differently from each other by adjusting a bias voltage input to each of the optical modulators.

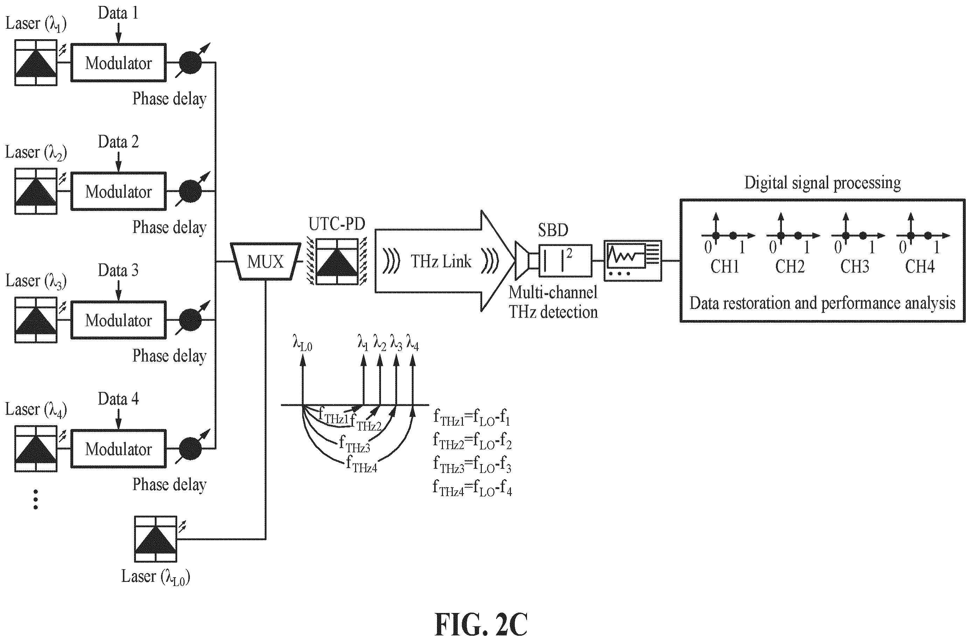

In addition, as shown in FIG. 2C, the transmission apparatus may further include phase delayers configured to differently control phases of the respective LD signals optically modulated by the plurality of optical modulators, and may adjust the zero level offsets differently from each other by differently setting phase delay values of the respective phase delayers.

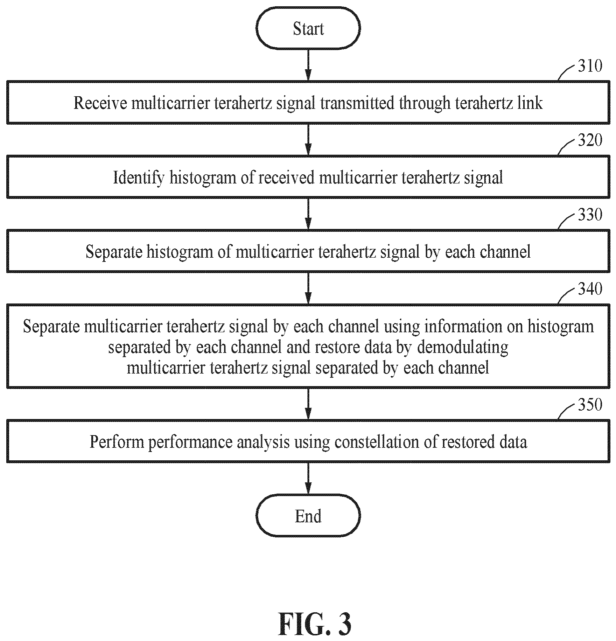

FIG. 3 is a diagram illustrating a method of restoring data by a reception apparatus of a multicarrier terahertz wireless transmission system, according to an embodiment.

In operation 310, the reception apparatus may receive a multicarrier terahertz signal transmitted through a terahertz link through elements such as an SBD, a mixer, etc.

In operation 320, the reception apparatus may identify a histogram of the multicarrier terahertz signal received through an oscilloscope.

In operation 330, the reception apparatus may separate the histogram of the multicarrier terahertz signal by each channel through a digital signal processor (DSP). Here, the DSP may separate the histogram by each channel through a histogram filter (or an adaptive filter using histogram peaks).

To this end, a boundary value, a bandwidth, and a filter shape of the histogram filter may be designed so that only two peaks are included for each channel in the histogram of the multicarrier terahertz signal. Since the boundary value and bandwidth of the histogram filter directly affect the performance of data restoration, an optimization process may be added to histogram filter design. More specifically, the DSP of the reception apparatus may utilize the eye height, peak-to-peak magnitude, and standard deviation characteristics on the histogram and may optimize the histogram filter by generating an artificial intelligence (AI) algorithm and a feedback-based probability profile (e.g., a histogram curve).

In operation 340, the reception apparatus may separate the multicarrier terahertz signal by each channel using information on the histogram separated by each channel through the DSP, and may restore data by demodulating the multicarrier terahertz signal separated by each channel.

Finally, in operation 350, the reception apparatus may perform performance analysis including the bit error rate and error vector magnitude using the constellation of data restored through the DSP.

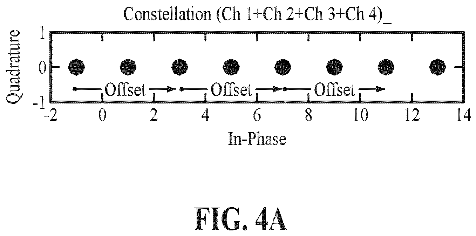

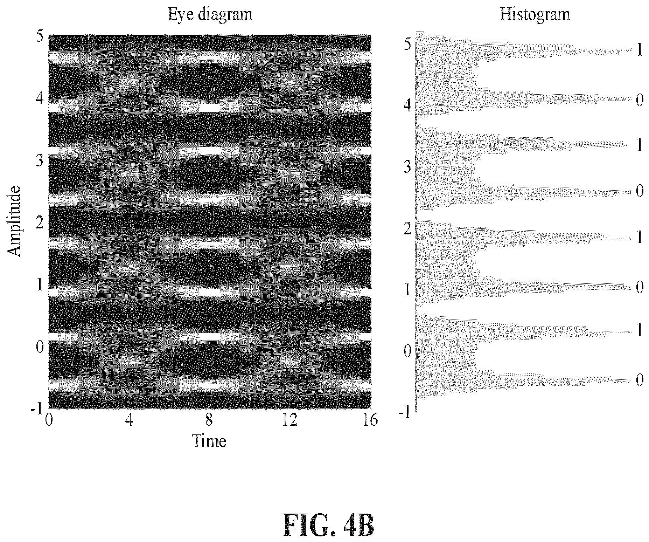

FIGS. 4A and 4B are diagrams illustrating results of verifying function and performance of a multicarrier terahertz wireless transmission system through a simulation for a 4-channel BPSK modulation method, according to an embodiment.

A multicarrier terahertz signal modulated in the BPSK method through the multicarrier terahertz wireless transmission system of the present disclosure may include four channels in which offsets corresponding to zero level are 0, 4, 8, and 12, respectively, as shown in FIG. 4A. Accordingly, an eye diagram and histogram for BPSK modulation of the multicarrier terahertz signal may be as shown in FIG. 4B.

Referring to FIG. 4B, BPSK modulation performance may be confirmed in the eye amplitude of the multicarrier terahertz signal, and in addition, it may be noted that peaks in the histogram are separated enough to be distinguishable without overlapping between channels.

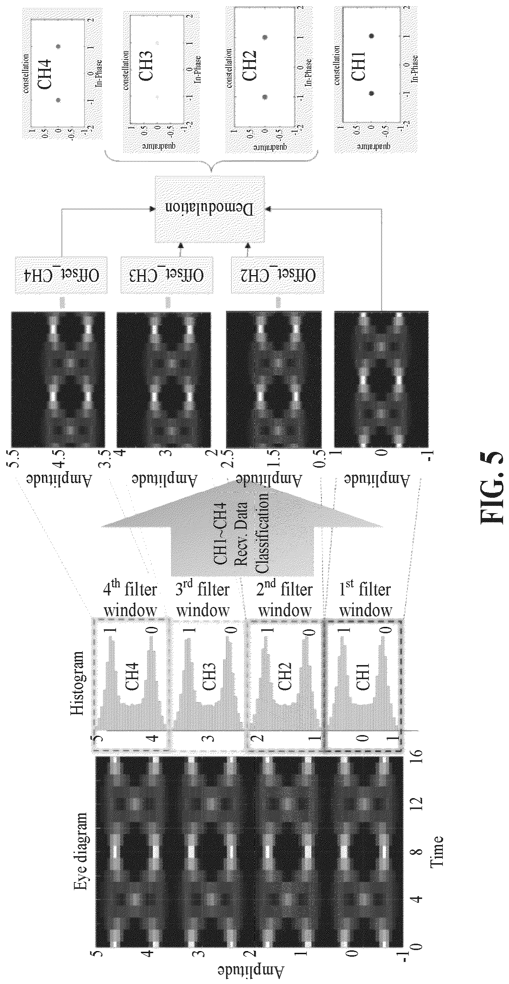

FIG. 5 is a diagram illustrating a result of restoring data by a reception apparatus of a multicarrier terahertz wireless transmission system according to an embodiment.

Referring to FIG. 5, the reception apparatus may generate four histogram filters to separate a histogram of a multicarrier terahertz signal into four and may separate the multicarrier terahertz signal by each channel using information on the histogram separated by each channel. The multicarrier terahertz signal transmitted from a transmission apparatus may include basic transmission information such as the number of channels and offsets. However, since a channel may be changed due to various noises on a terahertz link, the reception apparatus may analyze the multicarrier terahertz signal transmitted from the transmission apparatus to confirm whether the multicarrier terahertz signal corresponds with the basic transmission information, then may identify the number of channels, and may generate histogram filters corresponding to the identified number of channels.

Here, it may be noted that an eye diagram of the multicarrier terahertz signal separated by each channel has zero level offsets applied differently to each other, like the multicarrier terahertz signal generated by the transmission apparatus.

The reception apparatus may restore data without error for each channel after removing the zero level offsets applied differently for each channel and by undergoing a demodulation process for BPSK modulation.

Accordingly, the multicarrier terahertz signal transmission method of the multicarrier terahertz wireless transmission system proposed in the present disclosure does not require a separate multiplexer or demultiplexer to generate and separate multi-channel signals, and therefore, system volume and cost do not increase as transmission capacity increases, and a large-capacity system may be built in an ultra-small/low-cost form.

In addition, since the present disclosure may be applied to existing large-capacity transmission technology, scalability is very high, and not only the terahertz band but also multiple bands including the millimeter band may use the present disclosure so that the transmission capacity may be maximized by baud rate x number of channels x number of bands.

The embodiments described herein may be implemented using a hardware component, a software component and/or a combination thereof. For example, a device, method, and components described in the embodiments may be implemented using one or more general-purpose or special-purpose computers, such as, for example, a processor, a controller, an arithmetic logic unit (ALU), a DSP, a microcomputer, a field programmable gate array (FPGA), a programmable logic unit (PLU), a microprocessor, or any other device capable of responding to and executing instructions. The processing device may run an operating system (OS) and one or more software applications that run on the OS. The processing device may also access, store, manipulate, process, and create data in response to execution of the software. For purpose of simplicity, the description of a processing device is used as singular; however, one of ordinary skill in the art will appreciate that a processing device may include multiple processing elements and/or multiple types of processing elements. For example, the processing device may include a plurality of processors, or a single processor and a single controller. In addition, different processing configurations are possible, such as parallel processors.

The software may include a computer program, a piece of code, an instruction, or one or more combinations thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored in a non-transitory computer-readable recording medium.

The methods according to the embodiments may be recorded in non-transitory computer-readable media including program instructions to implement various operations of the embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc-read only memory (CD-ROM) and digital video discs (DVDs); magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter.

The above-described hardware devices may be configured to act as one or more software modules in order to perform the operations of the above-described embodiments, or vice versa.

Although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents to the claims are also within the scope of the following claims.

## Claims

1. A transmission apparatus for a multicarrier terahertz wireless transmission system, the transmission apparatus comprising:
a plurality of laser diodes (LDs) configured to output optical signals having different carrier frequencies;
a plurality of optical modulators configured to optically modulate LD signals output through the LDs;
a beating light source configured to provide a local oscillator (LO) signal required to generate terahertz signals through optical beating of the LD signals; and
a signal generator configured to generate a multicarrier terahertz signal including the terahertz signals having different carrier frequencies through optical beating of each of the LD signals and the LO signal,
wherein zero level offsets of each of the terahertz signals having different carrier frequencies are adjusted differently from each other.

2. The multicarrier terahertz wireless transmission system of claim 1, wherein
the zero level offsets of each of the terahertz signals having different carrier frequencies are adjusted differently from each other, by adding different offsets to a voltage of a data signal input to each of the optical modulators.

3. The multicarrier terahertz wireless transmission system of claim 1, wherein
the zero level offsets of each of the terahertz signals having different carrier frequencies are adjusted differently from each other, by adjusting a bias voltage input to each of the optical modulators.

4. The multicarrier terahertz wireless transmission system of claim 1 further comprising:
phase delayers configured to differently control phases of the respective LD signals optically modulated by the plurality of optical modulators.

5. The multicarrier terahertz wireless transmission system of claim 4, wherein
the zero level offsets of each of the terahertz signals having different carrier frequencies are adjusted differently from each other, by differently setting phase delay values of the respective phase delayers.

6. A reception apparatus for a multicarrier terahertz wireless transmission system, the reception apparatus comprising:
a digital signal processor (DSP) configured to separate a histogram of a received multicarrier terahertz signal by each channel using a histogram filter, separate the received multicarrier terahertz signal by each channel using information on the histogram separated by each channel, and restore the received multicarrier terahertz signal to an original signal.

7. The multicarrier terahertz wireless transmission system of claim 6, wherein
a boundary value, a bandwidth, and a filter shape of the histogram filter are designed so that only two peaks are included for each channel in the histogram of the received multicarrier terahertz signal.

8. The multicarrier terahertz wireless transmission system of claim 6, wherein
the histogram filter utilizes an eye height, a peak-to-peak magnitude, and standard deviation characteristics on the histogram, and is optimized by generating an artificial intelligence (AI) algorithm and a feedback-based probability profile (e.g., a histogram curve).

9. The multicarrier terahertz wireless transmission system of claim 6, wherein
the received multicarrier terahertz signal is a signal in which zero level offsets are adjusted differently from each other by adding different offsets to a voltage of a data signal input to each of optical modulators included in a transmission apparatus.

10. The multicarrier terahertz wireless transmission system of claim 6, wherein
the received multicarrier terahertz signal is a signal in which zero level offsets are adjusted differently from each other by adjusting a bias voltage input to each of optical modulators included in a transmission apparatus.

11. The multicarrier terahertz wireless transmission system of claim 6, wherein
the received multicarrier terahertz signal is a signal in which zero level offsets are adjusted differently from each other by differently setting phase delay values of respective phase delayers included in a transmission apparatus.

12. A multicarrier terahertz signal transmission method performed by a transmission apparatus of a multicarrier terahertz wireless transmission system, the multicarrier terahertz signal transmission method comprising:
outputting optical signals having different carrier frequencies through a plurality of laser diodes (LDs);
optically modulating LD signals output through the LDs using a plurality of optical modulators;
outputting a local oscillator (LO) signal required to generate terahertz signals through optical beating of the LD signals through a beating light source; and
generating a multicarrier terahertz signal including the terahertz signals having different carrier frequencies through optical beating of each of the LD signals and the LO signal, using a signal generator,
wherein zero level offsets of each of the terahertz signals having different carrier frequencies are adjusted differently from each other.

13. The multicarrier terahertz signal transmission method of claim 12, wherein
the zero level offsets of each of the terahertz signals having different carrier frequencies are adjusted differently from each other, by adding different offsets to a voltage of a data signal input to each of the optical modulators.

14. The multicarrier terahertz signal transmission method of claim 12, wherein
the zero level offsets of each of the terahertz signals having different carrier frequencies are adjusted differently from each other, by adjusting a bias voltage input to each of the optical modulators.

15. The multicarrier terahertz signal transmission method of claim 12, further comprising:
differently controlling phases of the respective LD signals optically modulated by the plurality of optical modulators, using phase delayers.

16. The multicarrier terahertz signal transmission method of claim 15, wherein
the zero level offsets of each of the terahertz signals having different carrier frequencies are adjusted differently from each other, by differently setting phase delay values of the respective phase delayers.
